# EUROPEAN PATENT SPECIFICATION

(11) **EP 4 178 133 B1**
(45) Date of publication and mention of the grant of the patent: **02.04.2025**
(21) Application number: 21206269.9
(22) Date of filing: 03.11.2021
(51) Int. Cl.: H04J 14/02, H04L 12/28

(54) **METHOD FOR PROVIDING, BY MEANS OF A TELECOMMUNICATIONS NETWORK, A COMMUNICATION OR CONNECTIVITY SERVICE BETWEEN A FIRST LOCATION AND AT LEAST A SECOND LOCATION BASED ON OPTICAL DATA TRANSMISSION OF A USER-DEFINED OPTICAL SIGNAL, BROADBAND ACCESS NETWORK OR TELECOMMUNICATIONS NETWORK, SYSTEM, OPTICAL SAFETY AND POLICY ENTITY OR FUNCTIONALITY OR CENTRAL OFFICE POINT OF DELIVERY, PROGRAM AND COMPUTER-READABLE MEDIUM**
VERFAHREN, UM MITTELS EINES TELEKOMMUNIKATIONSNETZES EINEN KOMMUNIKATIONS- ODER VERBINDUNGSDIENST ZWISCHEN EINER ERSTEN STELLE UND MINDESTENS EINER ZWEITEN STELLE AUF DER BASIS VON OPTISCHER DATENÜBERTRAGUNG EINES BENUTZERDEFINIERTEN OPTISCHEN SIGNALS, EINES BREITBANDZUGANGSNETZWERKS ODER EINES TELEKOMMUNIKATIONSNETZWERKS, EINES SYSTEMS, EINER OPTISCHEN SICHERHEITS- UND RICHTLINIENEINHEIT ODER EINES LIEFERORTS EINER ZENTRALSTELLE BEREITZUSTELLEN, PROGRAMM UND COMPUTERLESBARES MEDIUM
PROCÉDÉ DE FOURNITURE, AU MOYEN D'UN RÉSEAU DE TÉLÉCOMMUNICATIONS, D'UN SERVICE DE COMMUNICATION OU DE CONNECTIVITÉ ENTRE UN PREMIER EMPLACEMENT ET AU MOINS UN SECOND EMPLACEMENT, SUR LA BASE D'UNE TRANSMISSION OPTIQUE DE DONNÉES D'UN SIGNAL OPTIQUE DÉFINI PAR L'UTILISATEUR, D'UN RÉSEAU D'ACCÈS À LARGE BANDE OU D'UN RÉSEAU DE TÉLÉCOMMUNICATIONS, D'UN SYSTÈME, D'UNE ENTITÉ OU D'UNE FONCTIONNALITÉ DE SÉCURITÉ OU DE POLITIQUE OPTIQUE OU D'UN POINT DE LIVRAISON DE CENTRAL TÉLÉPHONIQUE, D'UN PROGRAMME ET D'UN SUPPORT LISIBLE PAR ORDINATEUR

(43) Date of publication of application: 10.05.2023
(73) Proprietor: Deutsche Telekom AG, 53113 Bonn (DE)
(72) Inventor: HAAG, Thomas, 63110 Rodgau (DE); WEIERSHAUSEN, Werner, 64859 Eppertshausen (DE)
(74) Representative: Schwöbel, Thilo K.

(56) References cited:
- WO-A1-2009/095416
- FRANCESCO PAOLUCCI ET AL: "Enabling transparent lambda services between metro and core networks", PHOTONIC NETWORK COMMUNICATIONS, KLUWER ACADEMIC PUBLISHERS, BO, vol. 23, no. 2, 6 December 2011 (2011-12-06), pages 137 - 147, XP035027605, ISSN: 1572-8188, DOI: 10.1007/S11107-011-0344-9
- MAIER M ET AL: "STARGATE: the next evolutionary step toward unleashing the potential of WDM EPONs [Topics in Optical Communications]", IEEE COMMUNICATIONS MAGAZINE, IEEE SERVICE CENTER, PISCATAWAY, US, vol. 45, no. 5, 1 May 2007 (2007-05-01), pages 50 - 56, XP011381850, ISSN: 0163-6804, DOI: 10.1109/MCOM.2007.358848

## Description

### BACKGROUND

The present invention relates to a method for providing, by means of a telecommunications network, a communication or connectivity service between a first location and at least a second location based on optical data transmission of a user-defined optical signal,
wherein the telecommunications network comprises a backbone network and/or an aggregation network as well as an access network, and the telecommunications network and its infrastructure being used to both
-- provide end-user communication services and/or IP connectivity to a multitude of end-users connected to the access network, and
-- connect the first location and the at least second location by means of at least access network infrastructure and aggregation network infrastructure comprising a plurality of optical network nodes.

Furthermore, the present invention relates to a broadband access network or telecommunications network for providing, by means of the telecommunications network, a communication or connectivity service between a first location and at least a second location based on optical data transmission of a user-defined optical signal,
wherein the telecommunications network comprises a backbone network and/or an aggregation network as well as the access network, and the broadband access network and the telecommunications network and its infrastructure being used to both
-- provide end-user communication services and/or IP connectivity to a multitude of end-users connected to the access network, and
-- connect the first location and the at least second location by means of at least access network infrastructure and aggregation network infrastructure comprising a plurality of optical network nodes.

Additionally, the present invention relates to a system for providing, by means of a telecommunications network, a communication or connectivity service between a first location and at least a second location based on optical data transmission of a user-defined optical signal,
wherein the telecommunications network comprises a backbone network and/or an aggregation network as well as an access network, and the broadband access network and the telecommunications network and its infrastructure being used to both
-- provide end-user communication services and/or IP connectivity to a multitude of end-users connected to the access network, and
-- connect the first location and the at least second location by means of at least access network infrastructure and aggregation network infrastructure comprising a plurality of optical network nodes.

Additionally, the present invention relates to an optical safety and policy entity or functionality or central office point of delivery provided to be used as part of an inventive system or as part of an inventive broadband access network or telecommunications network.

Furthermore, the present invention relates to a program and to a computer-readable medium for operating an inventive broadband access network of a telecommunications network.

The exchange of information in broadband communication systems or telecommunications networks, both in fixed-line as in wireless communication systems (or fixed-line communication networks and mobile communication networks) has already grown dramatically and probably will also grow in the future due to the rapid spread of different data services in such communication networks.

In conventionally known or current telecommunications networks, typically having or comprising broadband access networks and/or aggregation networks that have or comprise central office points of delivery, many end-users or subscribers are connected to be provided with communication services and/or IP connectivity. Typically in such broadband access networks, end-users or subscribers operate customer premises equipment or home gateway devices in order to establish a (mostly wireline) connection to access nodes of the broadband access network, typically as part of or located at a central office point of delivery.
At such access nodes and/or at the respective central office point of delivery, such communication services and/or IP connectivity are/is provided (to the end-users or subscribers) based on electrical or electronical processing and/or communication technology - hence, even in case the end-users or subscribers are connected to the access node or central office point of delivery using wireline optical data transmission links (such as, e.g., a passive optical network, PON), such end-user data, or, rather, the respective signals carrying these data (in uplink direction), are converted to and processed as electrical signals in the respective access node and/or the respective central office point of delivery, and - in case of a long-distance transmission requirement of at least a part of such (uplink) end-user data - optical signals are used to carry these end-user data, via a backbone part of the network and/or an aggregation part (or ring) of the network, towards other (typically faraway) network entities or network nodes.

According to such a mode of operation of conventionally known telecommunications networks, it might be possible to connect an end-user via an optical data transmission line (such as, e.g., via a passive optical network, PON, or also via a point-to-point optical transmission line), however the respective signals carrying the end-user's data (i.e. the end-user's data, in uplink direction, originating from the end-user's home gateway or customer premises equipment, as well as the end-user's data, in downlink direction, destinated to the end-user's home gateway or customer premises equipment) are necessarily processed as electrical signals by the respective access node and/or by the respective central office point of delivery through which the considered end-user is connected to the telecommunications network.
This also necessarily means, on the one hand, at least a twofold conversion from the optical domain towards the electrical domain and from the electrical domain towards the optical domain, and, on the other hand and as a consequence thereof, that it is impossible to transmit a user-defined optical signal between a first location connected to the telecommunications network towards a second location connected to the telecommunications network in a transparent manner without at least physically modifying the user-defined optical signal. In contrast to systems relying on optical-electrical-optical conversion, it is also possible to provide transparent end-to-end connections where the signal entirely remains in the optical domain. In "Enabling transparent lambda services between metro and core networks" (Paolucci, F., Giorgetti, A., Sambo, N. et al., Photon Netw Commun 23, pp. 137-147, 2012), the authors propose a modification of the STARGATE access-metro network (see "STARGATE: the next evolutionary step toward unleashing the potential of WDM EPONs" by M. Maier, M. Herzog and M. Reisslein, IEEE Communications Magazine, vol. 45, no. 5, pp. 50-56, 2007). The STARGATE architecture is based on a hybrid ring-star network interconnecting several conventional central offices and a hot spot central office which links the STARGATE network to a WSON core network. In order to provide transparent end-to-end lambda services to particular end-users, the system described by Paolucci et al. directly connects long-reach optical network units via a central arrayed waveguide grating to the hot spot central office, optically bypassing the conventional central offices and the corresponding optical line terminals.

### SUMMARY

An object of the present invention is to provide a technically simple, effective and cost effective solution for providing, by means of a telecommunications network, a communication or connectivity service between a first location and at least a second location based on optical data transmission of a user-defined optical signal, wherein the telecommunications network and its infrastructure is able to be used to both provide end-user communication services and/or IP connectivity to end-users, and as well as to connect the first and second location by means of a plurality of optical network nodes for the user-defined optical signal to be transmitted transparently and essentially without being modified between the first and second location. A further object of the present invention is to provide a corresponding broadband access network or corresponding telecommunications network, a corresponding system, a corresponding optical safety and policy entity or functionality or central office point of delivery comprising an optical safety and policy entity or functionality.

The object of the present invention is achieved by a method according to claim 1 and the corresponding independent claims 9 to 13.

It is thereby advantageously possible according to the present invention to provide an optical point-to-point transmission solution between the first and second location such that the user-defined optical signal is transmitted, through the telecommunications network and all its considered network nodes in an essentially unmodified manner, i.e. the user-defined optical signal - transported or transmitted in the direction from the first location to the second location, and transmitted by an optical hardware device at the first location - is able to be received, by means of a further optical receiver hardware at the second location, essentially as it has been transmitted or sent, i.e. especially it is received, e.g. using the same optical modulation scheme, as it was transmitted. For example, it is advantageously possible according to the present invention to provide an optical service between the first and second location of the telecommunications network in the form of a so-called lambda-service, especially for business customers of the telecommunications network, while still providing end-user communication services and/or IP connectivity to a multitude of end-users using the same backbone network and aggregation network infrastructure of the
telecommunications network. Such business customers are often other carriers (i.e. operators of other telecommunications networks) within wholesale contracts, such as, e.g., mobile network operators, MNO, who could use lambda services as transport enablers, e.g. for 5G mobile front- and backhaul. According to the present invention, a lambda service allows for the freedom of the user to produce any kind of protocol or bandwidth (between the first and second location, i.e. the user-defined optical signal is completely user-defined and the operator of the transport telecommunications network (providing the forwarding of the user-defined optical signal between the first and second location) only provides the - all-optical - transmission or forwarding functionality (between the first and second location) without interfering and/or imposing conditions regarding the user-defined optical signal other than conditions such as to assure the functionality and to avoid damage to the optical transmission network of the telecommunications network).
Furthermore, according to the present invention, it is advantageously possible to provide the communication or connectivity service (or lambda service) as a complement to service offerings at the IP layer (i.e. providing end-user communication services and/or IP connectivity). Especially, the lambda service provides for a free transmission of any possible protocol without principal technical limitations by the network elements used by the host (hosting carrier), i.e. the transporting telecommunications network. As the carrier (i.e. the telecommunications network) still needs control, the present invention provides a solution to support such unlimited lambda services with comprehensive control options by the host telecommunications network.
According to the present invention, it is furthermore advantageously possible that the customer of the lambda service (i.e. the user feeding or inputting the user-defined optical signal at the first location and receiving it at the second location) is able to use their own optical interfaces (transmitter and receiver) while the service provider (i.e. the telecommunications network) only supplies the fiber network for optical interconnection, typically in a defined optical spectral range or optical window.
According to the present invention, there are different modes of operation, especially regarding how the first location is connected to the telecommunications network, or its aggregation network infrastructure and/or backbone network infrastructure:
-- according to a first mode, a passive fiber network is used, e.g. the network provider (i.e. the telecommunications network) supplies a fiber link or a fiber network (e.g. PON tree network);
-- according to a second mode, an active fiber-optical network is used, e.g. the network provider (i.e. the telecommunications network) supplies an amplified and channelizable (optical) network, i.e. a WDM network (wavelength division multiplex network) with optical amplifiers and spectral filters, maybe even switchable optical nodes (ROADMs, reconfigurable optical add drop multiplexers).
   It is furthermore advantageously possible according to the present invention that the optical signal (i.e. the user-defined optical signal) being delivered by the customer (of the telecommunications network) itself can be used as agnostic underlay layer for any other higher-layer protocols on top (e.g. for Layer 1/OTN services, for Layer 2/Ethernet services, for Layer 3/IP services and/or SD-WAN (software defined wide area network)/OTT (over the top) or else). Furthermore, it is advantageously possible according to the present invention that the end-to-end lambda service is managed by a disaggregated architecture, including several user plane (UP) and control plane (CP) functional building blocks that are placed especially at central office points of delivery (PODs), at network elements along the service route, at hierarchical controller and orchestrator entities and OSS/BSS entities.

The telecommunications network according to the present invention might be a fixed-line telecommunications network or a mobile communication network but could also have both aspects, i.e. parts of a fixed-line telecommunications network (or being a fixed-line telecommunications network in such parts) and parts of a mobile communication network (or being a mobile communication network in such parts); such networks are also known under the term fixed-mobile-convergence networks (FMC networks).

Furthermore, it is advantageously possible and preferred according to the present invention that the telecommunications network comprises a transmission functionality regarding the backbone network and aggregation network and the access network, wherein the user-defined optical signal is characterized by an optical modulation scheme, wherein a transmission path between the first location and the second location comprises an optical transmission path comprising the first optical data transmission fiber and the second optical data transmission fiber, and wherein the transmission functionality is arranged such that the optical modulation scheme is maintained throughout the optical transmission path,
wherein especially the transmission path is identical with the optical transmission path.

By means of maintaining the optical modulation scheme throughout the transmission path of the user-defined optical signal, it is advantageously possible that the user-defined optical signal is received, at the second location, as it is (or has been) fed or input at the first location, i.e. essentially without (necessarily) being modified between the first and second location.
In other words, it is preferred according to the present invention that between the first and second location, the telecommunications network comprises a transmission functionality regarding the backbone network and aggregation network and the access network that is based exclusively or almost exclusively on optical data transmission. This especially refers to there being no substantial conversion of the optical signals into the electrical domain, and if yes at most for regeneration purposes of the optical signal; that there is no substantial conversion (or no conversion at all) of the optical signals into the electrical domain is the case if all-optical regenerators (or all-optical repeaters) are used for the regeneration of the optical signal but also in case that an optical signal (that is to be transmitted through the telecommunications network, especially at or between two network nodes) needs to be regenerated at a specific position along the transmission path and furthermore in case that such a specific regeneration of the optical signal requires an electrical conversion of the optical signal (and, thereafter, a back conversion to the regenerated optical signal by means of using an optical-electrical-optical regenerator or repeater).

According to a further preferred embodiment of the present invention, a further user-defined optical signal is fed or input to the second optical data transmission fiber and received at the first optical data transmission fiber, wherein the further user-defined optical signal is likewise a user-defined optical signal,
wherein especially the user-defined optical signal and the further user-defined optical signal are transmitted, between the first and second location, in a transparent and/or optically unchanged manner (except, of course, for physically inevitable signal distortions, dispersion and/or attenuations along the optical transmission path), especially such that the user-defined optical signal is received, at the second optical data transmission fiber as it has been fed or input to the first optical data transmission fiber, and especially such that the further user-defined optical signal is received, at the first optical data transmission fiber as it has been fed or input to the second optical data transmission fiber,
wherein especially the optical transmission functionality is agnostic to both the user-defined optical signal and the further user-defined optical signal, which are transmitted by the optical transmission functionality freely and using any technically possible protocol.

Thereby, it is advantageously possible to easily and effectively implement the inventive method.

According to the present invention, the broadband access network comprises an optical safety and policy entity or functionality connecting the first location and/or the first optical data transmission fiber to the telecommunications network, especially its aggregation network and/or its backbone network, wherein the optical safety and policy entity or functionality provides for
-- a protection of the optical transmission functionality, especially with regard to the aggregation network (and thereby also with regard to the backbone network),
-- a policy decision functionality, and
-- a policy enforcement functionality

regarding the user-defined optical signal (and optionally also the further user-defined optical signal),
wherein especially the broadband access network comprises at least one central office point of delivery comprising or being coupled with the optical safety and policy entity or functionality.

By means of using the optical safety and policy entity or functionality (and the further optical safety and policy entity or functionality), it is advantageously possible to connect the first location (or the first optical data transmission fiber) more or less directly to the optical domain of the telecommunications network, i.e. especially the aggregation network and/or the backbone network, and thereby to provide for an all-optical (or at least almost all-optical) transmission link between the first and second location (and, likewise, in opposite direction, from the second location to the first location). The protecting functionality of the optical safety and policy entity or functionality as well as the policy decision and policy enforcement functionalities ensure that the telecommunications network is protected and the communication or connectivity service is used according to agreed service level agreements, SLA.
According to the present invention, such protection applies regarding the initialization signal, and preferably any other signal (also regarding a further optical initialization signal), and especially is applied generally or continuously; this feature being especially important as third-party (customer-defined) hardware is used at the ends of the first and/or second optical data transmission fibers (i.e. at the first and second locations) that the operator of the telecommunications network does not necessarily control.

Furthermore, according to a preferred embodiment of the present invention, the central office point of delivery connects the first location and/or the first optical data transmission fiber to the telecommunications network, especially its transmission functionality, and wherein a further central office point of delivery connects the second location and/or the second optical data transmission fiber to the telecommunications network, especially its transmission functionality,
wherein thereby an optical and transparent user plane point-to-point connection is realized between the first and second location.

Thereby, it is advantageously possible to easily and effectively implement the inventive method.

According to a further embodiment of the present invention, the first location is connected to the central office point of delivery, via the first optical data transmission fiber, using at least one of the following:
-- a passive optical fiber as a point-to-point link,
-- an active optical fiber, i.e. optically amplified,
-- a passive optical network, especially a PON, e.g. XGS-PON, PON-tree or a part thereof.

Thereby, it is advantageously possible to use different possible optical connections of the first and/or second location to the telecommunications network, especially its backbone network and/or aggregation network infrastructure.

According to the present invention, the user-defined optical signal corresponds to an operative signal to be transmitted between the first and second location, wherein prior to the user-defined optical signal being fed or input to the first optical data transmission fiber, an initialization signal is fed or input to the first optical data transmission fiber, wherein the initialization signal is detected by the optical safety and policy entity or functionality, and subsequently optical and transparent user plane point-to-point connection is realized between the first and second location.

By means of using an initialization signal, it is advantageously possible to initialize the operative the communication or connectivity service without further relying on a control plane between the first location (or, especially, the optical transmission hardware of the customer) and the optical safety and policy entity or functionality.

Furthermore, according to the present invention, the communication or connectivity service between the first location and the second location is refused in case that the initialization signal is invalid,
wherein the transmission functionality of the telecommunications network with regard to the backbone network (and thereby also with regard to the aggregation network), is protected by the optical safety and policy entity or functionality.

Thereby, it is advantageously possible to easily and effectively implement the inventive method.

Furthermore, it is advantageously possible and preferred according to the present invention that the communication or connectivity service uses a network-internal transmission functionality between the optical safety and policy entity or functionality and the further optical safety and policy entity or functionality, wherein the network-internal transmission functionality is steered segment-wise by using a segment optical switching identifier information, the segment optical switching identifier information especially being modulated on top of the transport signal and retrieved by consecutive optical nodes in order to take routing decision and forward the optical signal along a transmission path, the transmission path especially comprising a plurality of transmission segments.

By means of using optical segment switching, it is advantageously possible according to the present invention that the segment optical switching identifier information is at least transmitted between consecutive optical network nodes along a considered transmission path (or, according to a further embodiment, either the segment optical switching identifier information or at least a part of the segment optical switching identifier is transmitted not only between consecutive optical network nodes but along a plurality of segments or optical hops or along the whole transmission path of (or provided by) the network-internal transmission functionality. Especially, the segment optical switching identifier information is provided as a modulation of the user plane signal, i.e. the user-defined optical signal. By means of a respective probe optical branch, an optical network node that is receiving the user-defined optical signal is able to receive and process the modulation signal and to read or detect the respective segment optical switching identifier information. The specific (or respective) segment optical switching identifier information, received at a respective (or considered) optical network node, especially comprises a switching information or switching indication or a reference or indication related to or referring to a transmission path such that the respective (or considered) optical network node is able to apply a switching decision.

Furthermore, it is advantageously possible and preferred according to the present invention that the central office point of delivery comprises a plurality of access nodes and an orchestrator entity or functionality, wherein the plurality of access nodes especially provide optical network termination functionality to one or a plurality of end-users in view of the end-users being provided with IP connectivity by the telecommunications network, wherein the end-users are connected to the telecommunications network via access network infrastructure, especially at least partly optical fiber infrastructure.

Thereby, it is advantageously possible to easily and effectively implement the inventive method.

Furthermore, the present invention relates to a broadband access network or a telecommunications network according to claim 9, to a system according to claim 10, and to an optical safety and policy entity or functionality or a central office point of delivery comprising an optical safety and policy entity or functionality provided to be used as part of an inventive system or as part of an inventive broadband access network or telecommunications network.

Still additionally, the present invention relates to a program according to claim 12, and to a computer-readable medium according to claim 13.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

Figure 1 schematically illustrates a telecommunications network according to the present invention, having a broadband access network with a central office point of delivery, providing end-user communication services and/or IP connectivity to a multitude of end-users connected to the access network.
Figure 2 schematically shows the telecommunications network providing a communication or connectivity service between a first location and a second location based on optical data transmission of a user-defined optical signal, the telecommunications network comprising a backbone network and/or an aggregation network as well as the access network.
Figure 3 schematically shows in greater detail the first location and its connection to the telecommunications network.
Figure 4 schematically shows in greater detail the optical safety and policy entity or functionality or the central office point of delivery comprising the optical safety and policy entity or functionality.

### DETAILED DESCRIPTION

The present invention will be described with respect to particular embodiments and with reference to certain drawings but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order; this is especially the case for the terms "first step", "second step", etc. It is to be understood that the terms so used are interchangeable under appropriate circumstances and that the embodiments of the invention described herein are capable of operation in other sequences than described or illustrated herein.

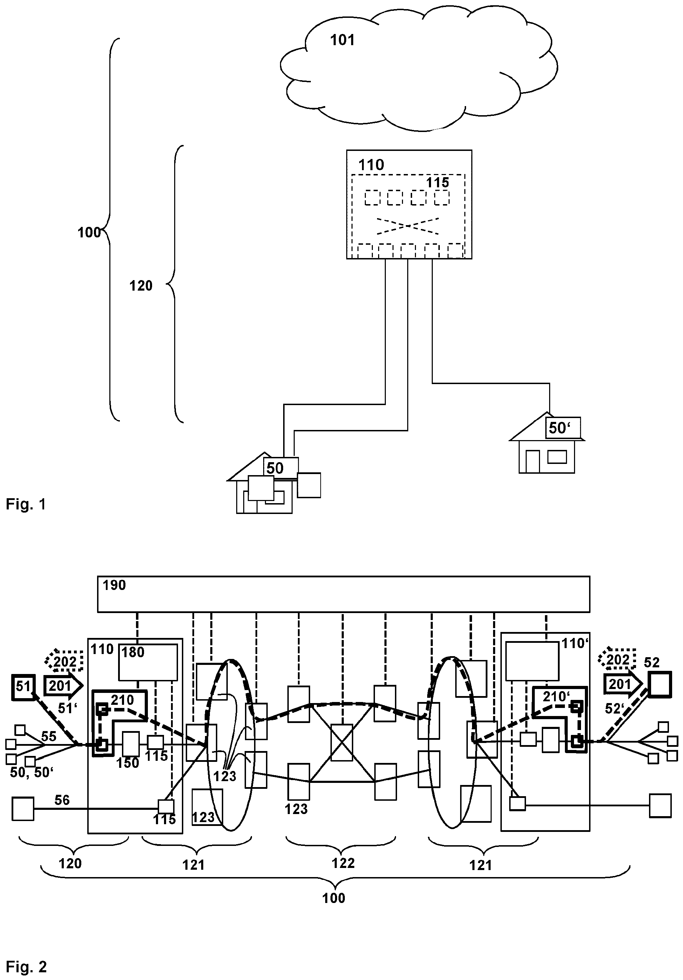

In Figure 1, a telecommunications network 100 according to the present invention is schematically shown, having - preferably - at least a fixed line part. A mobile (or cellular) part might be present as well, as part of the telecommunications network 100, but is not specifically illustrated in Figure 1. User equipments or client devices (not specifically indicated by means of reference signs in Figure 1) are connected to the telecommunications network 100 by means of a (broadband) access network 120. The telecommunications network 100 comprises, especially as part of the broadband access network 120, at least one logical or physical central office point of delivery 110 that is preferably realized within a (mini) data center and that is especially handling different access requirements, especially different access possibilities, of the client devices to network functionalities provided by the telecommunications network 100 or via the telecommunications network 100. In addition, the telecommunications network 100 also comprises - besides the broadband access network 120 - a core network 101. The client devices are typically connected to the logical or physical central office point of delivery 110 by means of a customer premises equipment device 50, 50' or by means of a customer premises equipment functionality that might be built into or realized by the client devices. Preferably but not necessarily, the central office point of delivery 110 comprises a switching fabric 115 comprising a plurality of spine network nodes and typically also a plurality of leaf network nodes which are not explicitly represented in Figure 1.

Figure 2 schematically shows the telecommunications network 100 providing a communication or connectivity service between a first location 51 and a second location 52 based on optical data transmission of a user-defined optical signal 201, the telecommunications network 100 comprising a backbone network 122 and an aggregation network 121 as well as the access network 120. Furthermore, the telecommunications network 100 comprises a network orchestrator 190.
According to the present invention, the first location 51 is linked to the telecommunications network 100 by means of at least one first optical data transmission fiber 51', and the second location 52 is linked to the telecommunications network 100 by means of at least one second optical data transmission fiber 52'.
The communication or connectivity service between the first location 51 and the at least second location 52 also involves the optical data transmission of a further user-defined optical signal 202.
Furthermore, the broadband access network 120 comprises an optical safety and policy entity or functionality 210 connecting the first location 51 and the first optical data transmission fiber 51' to the aggregation network 121 and the backbone network 122, wherein the optical safety and policy entity or functionality 210 provides for a protection of the optical transmission functionality (with regard to the backbone network 122 and the aggregation network 121), for a policy decision functionality, and for a policy enforcement functionality regarding the user-defined optical signal 201. Likewise, the broadband access network 120 comprises a further optical safety and policy entity or functionality 210' connecting the second location 52 and the second optical data transmission fiber 52' to the aggregation network 121 and the backbone network 122, wherein the further optical safety and policy entity or functionality 210' provides for a protection of the optical transmission functionality (with regard to the backbone network 122 and the aggregation network 121), for a policy decision functionality, and for a policy enforcement functionality regarding the further user-defined optical signal 202.
In the exemplary embodiment shown in Figure 2, the optical safety and policy entity or functionality 210 is co-located with the at least one central office point of delivery 110, and especially the central office point of delivery 110 comprises or is coupled with the optical safety and policy entity or functionality 210. Likewise in the exemplary embodiment shown in Figure 2, the further optical safety and policy entity or functionality 210' is co-located with a further central office point of delivery 110', and especially the further central office point of delivery 110' comprises or is coupled with the further optical safety and policy entity or functionality 210'. However, this symmetrical architecture (regarding the connection of the first and the second location 51, 52 to the telecommunications network 100) is only exemplarily shown in Figure 2, and the first location 51 is able to be linked to the telecommunications network 100 in a different manner compared to the second location 52.
As part of the central office point of delivery 110, an access node 150 is schematically shown; such access nodes 150 are typically used, as part of their respective central office points of delivery 110, 110', to connect end-users 50, 50' to the access network 120, and thereby to the telecommunications network 100, as this is schematically shown in Figure 1. Furthermore as part of the central office point of delivery 110, a switching fabric 115 (or, rather two instances of a switching fabric) is schematically shown in Figure 2. In Figure 2, the end-users 50, 50' are schematically shown as connected to the access network 120 by means of an optical communication link 55, especially a passive optical network, PON. Alternatively to using a passive optical network 55, a point-to-point connection 56, especially an optical point-to-point connection 56, is schematically shown in Figure 2. Furthermore as part of the central office point of delivery 110, an orchestrator entity or functionality 180 is schematically shown in Figure 2.

The communication or connectivity service between the first and second location 51, 52 is able to be established (in order to transmit the user-defined optical signal 201 and the further user-defined optical signal 202) while still the telecommunications network 100 and its infrastructure providing (or being able to provide) the end-user communication services and/or IP connectivity to the end-users 50, 50'. According to the present invention, it is advantageously possible to transmit the user-defined optical signal 201 between the first and second location 51, 52 by means of, in a first step, feeding or inputting the user-defined optical signal 201 to the first optical data transmission fiber 51', and, in a second step, receiving the user-defined optical signal 201 at the second optical data transmission fiber 52'. Thereby, it is meant that the user-defined optical signal 201 is received at the second location 52 as it is fed or input at the first location 51, i.e. essentially without being modified between the first and second location 51, 52. Accordingly, the communication or connectivity service between the first location 51 and the at least second location 52 also involves the optical data transmission of the further user-defined optical signal 202, which is likewise fed or input (in order to be transmitted in opposing direction with regard to the user-defined optical signal 201) to the second optical data transmission fiber 52' and received at the first optical data transmission fiber 51'. This is schematically represented, in Figure 2, by means of arrows and reference signs 201 and 202, respectively.

Figure 2 schematically shows a path that the user-defined optical signal 201 takes from the first location 51 to the second location 52 through the telecommunications network 100; this path is schematically indicated by means of a bold dashed line in Figure 2. In Figure 2, the case is schematically shown that also the further user-defined optical signal 202 (travelling, or being transmitted, in opposing direction compared to the user-defined optical signal 201) takes the same path as schematically shown for the user-defined optical signal 201. However, this is not always mandatorily realized: Both the backbone network 122 and also aggregation networks 121 are schematically shown as comprising a plurality of network nodes 123. Typically, there are different paths through the telecommunications network 100 or its infrastructure that are possible between any first and second location, and the further user-defined optical signal 202 might well travel (or be transmitted) using a different path from the path of the user-defined optical signal 201.

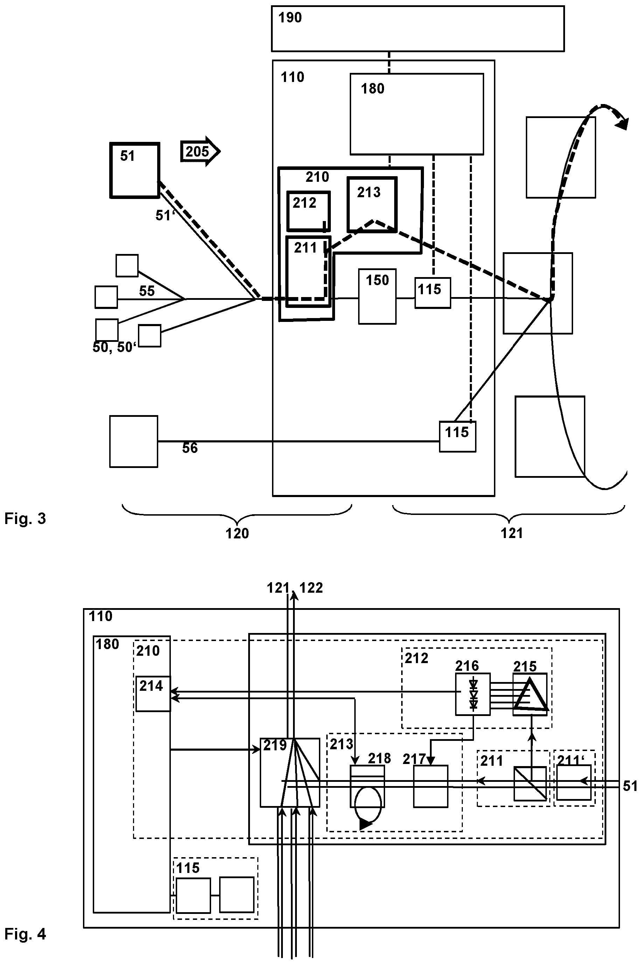

In Figure 3, the first location 51 and its connection to the telecommunications network 100 is schematically shown in greater detail. Again, the first location 51 is linked to the telecommunications network 100 by means of the first optical data transmission fiber 51'. And again, the broadband access network 120 comprises the optical safety and policy entity or functionality 210 connecting the first location 51 and the first optical data transmission fiber 51' to the telecommunications network 100. The optical safety and policy entity or functionality 210 provides for a protection of the optical transmission functionality, for a policy decision functionality, and for a policy enforcement functionality regarding the user-defined optical signal 201. Again, in the exemplary embodiment shown in Figure 2, the optical safety and policy entity or functionality 210 is co-located with the at least one central office point of delivery 110. The optical safety and policy entity or functionality 210 especially comprises a splitter entity or functionality 211, an optical detection entity or functionality 212, and an optical policy enforcement entity or functionality 213.

Figure 3 furthermore schematically shows an initialization signal 205. The initialization signal 205 is fed or input to the first optical data transmission fiber 51' in order for the communication or connectivity service between the first and second location 51, 52 to be initiated. The user-defined optical signal 201 (and likewise the further user-defined optical signal 202) corresponds to an operative signal to be transmitted between the first and second location 51, 52. However, in order to establish the communication service (i.e. the user-defined optical signal 201 being fed or input to the first optical data transmission fiber 51' and received at the second optical data transmission fiber 52'), the initialization signal 205 is fed or input to the first optical data transmission fiber 51'. The initialization signal 205 is detected by the optical safety and policy entity or functionality 210, and subsequently an optical and transparent user plane point-to-point connection is realized between the first and second location 51, 52. However, this communication or connectivity service is refused in case that the initialization signal 205 is invalid. Thereby, it is - inter alia - advantageously possible to protect the transmission functionality of the telecommunications network 100 with regard to the backbone network 122 and the aggregation network 121.

In Figure 4, the central office point of delivery 110 comprising the optical safety and policy entity or functionality 210 is schematically shown in greater detail. Again, the optical safety and policy entity or functionality 210 comprises the splitter entity or functionality 211. Either the splitter entity or functionality 211 is the first entry (towards the telecommunications network 100) of the user-defined optical signal 201 (and/or of the optical initialization signal 205) being fed to the first optical data transmission fiber 51'. Alternatively according to the present invention, the splitter entity or functionality 211 is not the first entry (towards the telecommunications network 100) of the user-defined optical signal 201 (and/or of the optical initialization signal 205) being fed to the first optical data transmission fiber 51' but a protective attenuator device 211' is provided as the first entry (towards the telecommunications network 100) of the user-defined optical signal 201 (and/or of the optical initialization signal 205). The protective attenuator device 211' provides for a comparatively fast attenuation or shutdown of the user-defined optical signal 201 and/or of the optical initialization signal 205 transmitted to the telecommunications network 100 and/or allows for a comparatively coarse optical attenuation in terms of spectral width and/or resolution.
By means of the splitter entity or functionality 211, a certain fraction (or measuring signal) of the optical power of the user-defined optical signal 201 (and/or of the optical initialization signal 205) is branched off towards the optical detection entity or functionality 212, such as, e.g., between 1% and 30% of the optical power, preferably between 3% and 20% of the optical power, more preferably between 5% and 10% of the optical power. By means of the optical detection entity or functionality 212, the branched off part of the user-defined optical signal 201 (and/or of the optical initialization signal 205) is analyzed, especially by means of decomposing the incoming light (i.e. the branched off part of the user-defined optical signal 201 and/or of the optical initialization signal 205) into spectral components, especially by means of using, e.g., an arrayed waveguide grating 215 or an alternative spectral filter (or filter device) and/or by means of using a channel indicator and/or channel power measurement entity 216. As part of the optical detection entity or functionality 212, a coarse channel function is able to be realized by means of a spectral differentiation of pre-configured channels; a fine or flexible spectral function is able to be realized by means of spectral decomposition of sub-channel-granular frequency components to address flexible lambda channels with different width in a flexgrid. These measurement results are provided to the optical policy enforcement entity or functionality 213 that especially comprises a variable optical attenuator 217 and/or an SLA-limiter and/or SLA-measurement entity 218. Thereby, it is advantageously possible to realizes an abstraction function: From the measured optical parameters, service properties are able to be calculated, especially the bandwidth or optical bandwidth (or spectral width) that the communication or connectivity service between the first and second location 51, 52 is able to use. Together with an optical policy decision function 214 (that is especially part of the control plane 180 (or orchestrator entity or functionality 180) of the central office point of delivery 110), the optical detection entity or functionality 212, and the optical policy enforcement entity or functionality 213 is able to provide for a translation of the service level agreement (SLA) into and optical parameter control: the SLA properties or parameters are translated top-down into physical control parameters of the optical channel or spectral window able to be used by the communication or connectivity service between the first and second location 51, 52. In case all conditions are fulfilled in order to transmit the user-defined optical signal 201 into the optical (backbone and aggregation) network, a switching entity 219, such as a ROADM (reconfigurable optical add drop multiplexer) is controlled or triggered to transmit the user-defined optical signal 201.
Hence, advantageously according to the present invention, an SLA control and the provision of (optical) network safety, as well as a managed optical service control (especially the prevention of alien wavelengths) is able to be realized by means of a policy decision and policy enforcement entity or functionality, provided by the optical safety and policy entity or functionality 210 and its components or entities, thereby especially also realizing a policy decision function, a policy enforcement function, and a network safety enforcement function (NSEF). The network safety enforcement function is especially required due to the fact that the network termination device (NT) is located at the customer premises, i.e. at the first location 51. The customer is enforced to apply their own optical module to align the fiber (i.e. the first optical data transmission fiber 51') by their own protocol and user plane traffic. Due to the free access to the optical plane of the fiber network (i.e. the aggregation and/or backbone network of the telecommunications network 100), the customer may also irradiate any laser light, either at a wavelength or at wavelengths that disturb(s) other lambda channels in the shared optical network or laser light with too high power (which may saturate optical amplifiers, and thus reducing their gain for all channels, so the optical transmission for all channels would be interrupted; or it could interfere with neighboring channels by non-linear crosstalk, e.g. by means of cross-phase multiplexing/XPM or four wave mixing /FWM). Hence, the network safety enforcement function protects the optical nodes of the telecommunications network 100 from unintended failures or misbehavior of customers (and from sabotaging attackers). A crucial problem for carriers to offer lambda services to customers is the difficulty to control and limit the usage of the optical lambda channels. This is similar to the offering of dark fiber to customers. In both cases the customer (in most cases a wholesale customer with own retail customers) is technically capable to use the basic physical resource of the carrier to perform any protocol and to transmit any bandwidth and to exploit any physical property for his own retail customers.
According to the present invention, the policy enforcement function limits the physical properties of the offered lambda channel by different technical sub devices that have a direct impact on these properties in a controlled manner. The customer (e.g. wholesale customer) concludes a contract with the carrier (i.e. the operator of the telecommunications network 100) on a certain service level agreement (SLA). The carrier uses the policy decision function (PDF) to measure properties of the optical lambda channel, in order to calculate abstracted service parameters therefrom and to compare them with the granted service SLA from the contract. The policy enforcement function (PEF) is composed by different elements to adjust the optical parameters of the traversing optical signal until the PDF and its SLA abstraction function correspond to each other. Especially, a direct control or an iterative loop of a control circuit is preferably implemented, such as a control loop of the following entities:
-- physical adjustment of one or more physical parameters,
-- measurement of the parameters,
-- abstraction to service parameters,
-- comparison with contract SLAs,
-- estimation of re-adjustable physical parameters by the offset (top-down-translation).

According to the present invention, the means of production of the lambda service (passive and active fiber based) or lambda services are preferably embedded, within a disaggregated network architecture, with the central office point of delivery 110 110' between the access network 120 and the transport network (aggregation 121 and core network domains 122 (or backbone network 122)). In this manner, the central office point of delivery 110, 110' is especially an important network node which combines a set of multiple disaggregated functions of the service and network user plane (UP), the control plane (CP) and the management plane (MP).

The end-to-end production, i.e. connectivity between the first and second locations 51, 52, of the lambda services has to be realized over different network domains:
The service starts at the first location 51 that especially correspond to the customer premises of the user or customer using the communication or connectivity service or lambda service: The network termination of the network provider (i.e. the telecommunications network 100) is especially a pure fiber tail, no further technical equipment. The technical equipment, the network termination (NT) with the laser-optical transmitter and receiver will be provided by the customer and there is a flexible choice. The optical signal (i.e. the user-defined optical signals 201, 202) being delivered by the customer itself can be used as agnostic underlay layer (Layer 0) for any other higher-layer protocols on top (e.g. for Layer 1/OTN services, for Layer 2/Ethernet services, for Layer 3/IP services and/or SD-WAN/OTT or else).
The optical signal from the customer is connected via fiber (passive or active, i.e. optically amplified fiber) through the access network 120 with the central office point of delivery 110, 110'.
The central office point of delivery 110, 110' (or, rather the optical safety and policy entity or functionality 210, 210', being located at the central office point of delivery or co-located) is the first entrance point, detects the first sign of life (i.e. the initialization signal 205), it un-locks the connection, it controls the properties of the service via policy decision and policy enforcement functions. The central office point of delivery 110 (i.e. the optical safety and policy entity or functionality 210) connects the lambda service from the access with the next network domain, the aggregation network 121.
The lambda service is routed through the aggregation network 121 to all adjacent networks (aggregation and backbone networks 121) and from there to its destination location (second location 52) - especially at another premises of the customer. For a point-to-point lambda connection, two optical safety and policy entity or functionalities 210, 210' (or two central office points of delivery 110, 110') are typically engaged.
The end-to-end lambda service is managed by a disaggregated architecture, including several user plane (UP) and control plane (CP) functional building blocks that are especially placed at the central office points of delivery, at network elements along the service route, at hierarchical controller and orchestrator entities and OSS/BSS entities.

## Claims

1. Method for providing, by means of a telecommunications network (100), a communication or connectivity service between a first location (51) and at least a second location (52) based on optical data transmission of a user-defined optical signal (201),
wherein the telecommunications network (100) comprises a backbone network (122) and an aggregation network (121) as well as an access network (120), and the telecommunications network (100) and its infrastructure being used to both
-- provide end-user communication services and/or IP connectivity to a multitude of end-users (50, 50') connected to the access network (120), and
-- connect the first location (51) and the at least second location (52) by means of at least access network infrastructure and aggregation network infrastructure comprising a plurality of optical network nodes (123),
wherein the first location (51) is linked to the telecommunications network (100) by means of at least one first optical data transmission fiber (51'), and wherein the second location (52) is linked to the telecommunications network (100) by means of at least one second optical data transmission fiber (52'), **characterized in that** the broadband access network (120) comprises an optical safety and policy entity or functionality (210) connecting the first location (51) to the aggregation network (121), wherein the optical safety and policy entity or functionality (210) is directly connected to the first optical data transmission fiber (51') and directly connected to the aggregation network (121), wherein the method comprises the following steps:
-- in a first step, the user-defined optical signal (201) is fed or input to the first optical data transmission fiber (51'), wherein the optical safety and policy entity or functionality (210) provides for
-- a protection of an optical transmission functionality with regard to the aggregation network (121), wherein the optical safety and policy entity or functionality (210) prevents the admittance of optical signals with too high power or with alien wavelengths,
-- a policy decision functionality, and
-- a policy enforcement functionality
regarding the user-defined optical signal (201), and
-- in a second step, the user-defined optical signal (201) is received at the second optical data transmission fiber (52'),
wherein the user-defined optical signal (201) corresponds to an operative signal to be transmitted between the first and second location (51, 52), wherein prior to the user-defined optical signal (201) being fed or input to the first optical data transmission fiber (51'), an initialization signal (205) is fed or input to the first optical data transmission fiber (51'), wherein the initialization signal (205) is detected by the optical safety and policy entity or functionality (210), wherein subsequently an optical and transparent user plane point-to-point connection is realized between the first and second location (51, 52) in case that the initialization signal (205) is valid, and the communication or connectivity service between the first location (51) and the second location (52) is refused in case that the initialization signal (205) is invalid, wherein the optical safety and policy entity or functionality (210) provides for protection of the optical transmission functionality with regard to the aggregation network (121) - besides regarding the user-defined optical signal (201) - also regarding the initialization signal (205).

2. Method according to claim 1, wherein the telecommunications network (100) comprises a transmission functionality regarding the backbone network (122) and aggregation network (121) and the access network (120), wherein the user-defined optical signal (201) is **characterized by** an optical modulation scheme, wherein a transmission path between the first location (51) and the second location (52) comprises an optical transmission path comprising the first optical data transmission fiber (51') and the second optical data transmission fiber (52'), and wherein the transmission functionality is arranged such that the optical modulation scheme is maintained throughout the optical transmission path,
wherein especially the transmission path is identical with the optical transmission path.

3. Method according to one of the preceding claims, wherein a further user-defined optical signal (202) is fed or input to the second optical data transmission fiber (52') and received at the first optical data transmission fiber (51'), wherein the further user-defined optical signal (202) is likewise a user-defined optical signal,
wherein especially the user-defined optical signal (201) and the further user-defined optical signal (202) are transmitted, between the first and second location (51, 52), in a transparent and/or optically unchanged manner, especially such that the user-defined optical signal (201) is received, at the second optical data transmission fiber (52') as it has been fed or input to the first optical data transmission fiber (51'), and especially such that the further user-defined optical signal (202) is received, at the first optical data transmission fiber (51') as it has been fed or input to the second optical data transmission fiber (52'),
wherein especially the optical transmission functionality is agnostic to both the user-defined optical signal (201) and the further user-defined optical signal (202), which are transmitted by the optical transmission functionality freely and using any technically possible protocol.

4. Method according to one of the preceding claims, wherein the broadband access network (120) comprises at least one central office point of delivery (110) comprising or being coupled with the optical safety and policy entity or functionality (210).

5. Method according to one of the preceding claims, wherein the central office point of delivery (110) connects the first location (51) and/or the first optical data transmission fiber (51') to the telecommunications network (100), especially its transmission functionality, and wherein a further central office point of delivery (110') connects the second location (52) and/or the second optical data transmission fiber (52') to the telecommunications network (100), especially its transmission functionality,
wherein thereby an optical and transparent user plane point-to-point connection is realized between the first and second location (51, 52).

6. Method according to one of the preceding claims, wherein the first location (51) is connected to the central office point of delivery (110), via the first optical data transmission fiber (51'), using at least one of the following:
-- a passive optical fiber as a point-to-point link,
-- an active optical fiber, i.e. optically amplified,
-- a passive optical network, especially a PON, XGS-PON, PON-tree or a part thereof.

7. Method according to one of the preceding claims, wherein the central office point of delivery (110) comprises a plurality of access nodes (150) and an orchestrator entity or functionality (180), wherein the plurality of access nodes (150) especially provide optical network termination functionality to one or a plurality of end-users (50, 50') in view of the end-users (50, 50') being provided with IP connectivity by the telecommunications network (100), wherein the end-users (50, 50') are connected to the telecommunications network (100) via access network infrastructure, especially at least partly optical fiber infrastructure (55).

8. Method according to one of the preceding claims, wherein the communication or connectivity service uses a network-internal transmission functionality between the optical safety and policy entity or functionality (210) and the further optical safety and policy entity or functionality (210'), wherein the network-internal transmission functionality is steered segment-wise by using a segment optical switching identifier information, the segment optical switching identifier information especially being modulated on top of the transport signal and retrieved by consecutive optical nodes in order to take routing decision and forward the optical signal along a transmission path, the transmission path especially comprising a plurality of transmission segments.

9. Broadband access network (120) or telecommunications network (100) for providing, by means of the telecommunications network (100), a communication or connectivity service between a first location (51) and at least a second location (52) based on optical data transmission of a user-defined optical signal (201),
wherein the telecommunications network (100) comprises a backbone network (122) and an aggregation network (121) as well as the access network (120), and the broadband access network (120) and the telecommunications network (100) and its infrastructure being used to both
-- provide end-user communication services and/or IP connectivity to a multitude of end-users (50, 50') connected to the access network (120), and
-- connect the first location (51) and the at least second location (52) by means of at least access network infrastructure and aggregation network infrastructure comprising a plurality of optical network nodes (123),
wherein the first location (51) is linked to the telecommunications network (100) by means of at least one first optical data transmission fiber (51'), and wherein the second location (52) is linked to the telecommunications network (100) by means of at least one second optical data transmission fiber (52'), **characterized in that** the broadband access network (120) comprises an optical safety and policy entity or functionality (210) connecting the first location (51) to the aggregation network (121), wherein the optical safety and policy entity or functionality (210) is directly connected to the first optical data transmission fiber (51') and directly connected to the aggregation network (121), wherein the optical safety and policy entity or functionality (210) is configured to provide for
-- a protection of an optical transmission functionality with regard to the aggregation network (121), wherein the optical safety and policy entity or functionality (210) is configured to prevent the admittance of optical signals with too high power or with alien wavelengths,
-- a policy decision functionality, and
-- a policy enforcement functionality
regarding the user-defined optical signal (201), wherein the broadband access network (120) or the telecommunications network (100) is configured such that the user-defined optical signal (201), fed or input to the first optical data transmission fiber (51'), is transmitted to the second optical data transmission fiber (52'), wherein the user-defined optical signal (201) corresponds to an operative signal to be transmitted between the first and second location (51, 52), wherein the optical safety and policy entity or functionality (210) is configured to detect an initialization signal (205) that is fed or input to the first optical data transmission fiber (51') prior to the user-defined optical signal (201) being fed or input to the first optical data transmission fiber (51'), wherein the broadband access network (120) or the telecommunications network (100) is configured such that subsequently to the detection of the initialization signal (205) an optical and transparent user plane point-to-point connection is realized between the first and second location (51, 52) in case that the initialization signal (205) is valid, and such that the communication or connectivity service between the first location (51) and the second location (52) is refused in case that the initialization signal (205) is invalid, wherein the optical safety and policy entity or functionality (210) is configured to provide for protection of the optical transmission functionality with regard to the aggregation network (121) - besides regarding the user-defined optical signal (201) - also regarding the initialization signal (205).

10. System comprising means of a telecommunications network (100) for providing a communication or connectivity service between a first location (51) and at least a second location (52) based on optical data transmission of a user-defined optical signal (201),
wherein the telecommunications network (100) comprises a backbone network (122) and an aggregation network (121) as well as a broadband access network (120), and the broadband access network (120) and the telecommunications network (100) and its infrastructure being used to both
-- provide end-user communication services and/or IP connectivity to a multitude of end-users (50, 50') connected to the access network (120), and
-- connect the first location (51) and the at least second location (52) by means of at least access network infrastructure and aggregation network infrastructure comprising a plurality of optical network nodes (123),
wherein the first location (51) is linked to the telecommunications network (100) by means of at least one first optical data transmission fiber (51'), and wherein the second location (52) is linked to the telecommunications network (100) by means of at least one second optical data transmission fiber (52'), **characterized in that** the broadband access network (120) comprises an optical safety and policy entity or functionality (210) connecting the first location (51) to the aggregation network (121), wherein the optical safety and policy entity or functionality (210) is directly connected to the first optical data transmission fiber (51') and directly connected to the aggregation network (121), wherein the optical safety and policy entity or functionality (210) is configured to provide for
-- a protection of an optical transmission functionality with regard to the aggregation network (121), wherein the optical safety and policy entity or functionality (210) is configured to prevent the admittance of optical signals with too high power or with alien wavelengths,
-- a policy decision functionality, and
-- a policy enforcement functionality
regarding the user-defined optical signal (201),
wherein the system is configured such that the user-defined optical signal (201), fed or input to the first optical data transmission fiber (51'), is transmitted to the second optical data transmission fiber (52'), wherein the user-defined optical signal (201) corresponds to an operative signal to be transmitted between the first and second location (51, 52), wherein the optical safety and policy entity or functionality (210) is configured to detect an initialization signal (205) that is fed or input to the first optical data transmission fiber (51') prior to the user-defined optical signal (201) being fed or input to the first optical data transmission fiber (51'), wherein the system is configured such that subsequently to the detection of the initialization signal (205) an optical and transparent user plane point-to-point connection is realized between the first and second location (51, 52) in case that the initialization signal (205) is valid, and such that the communication or connectivity service between the first location (51) and the second location (52) is refused in case that the initialization signal (205) is invalid, wherein the optical safety and policy entity or functionality (210) is configured to provide for protection of the optical transmission functionality with regard to the aggregation network (121) - besides regarding the user-defined optical signal (201) - also regarding the initialization signal (205).

11. Optical safety and policy entity or functionality (210) or central office point of delivery (110) comprising an optical safety and policy entity or functionality (210) provided to be used as part of a system according to claim 10 or as part of a broadband access network (120) or a telecommunications network (100) according to claim 9, and configured to perform a method according to any of claims 1 to 8.

12. Program comprising a computer readable program code which, when executed on a network node of a telecommunications network (100) according to claim 9 and/or on an optical safety and policy entity or functionality (210) according to claim 11, causes the network node of the telecommunications network (100) and/or the optical safety and policy entity or functionality (210) to perform a method according one of claims 1 to 8.

13. Computer-readable medium comprising instructions which when executed on a network node of a telecommunications network (100) according to claim 9 and/or on an optical safety and policy entity or functionality (210) according to claim 11, causes the network node of the telecommunications network (100) and/or the optical safety and policy entity or functionality (210) to perform a method according one of claims 1 to 8.

## Patentansprüche

1. Verfahren zum Bereitstellen, mittels eines Telekommunikationsnetzes (100), eines Kommunikations- oder Konnektivitätsdienstes zwischen einem ersten Standort (51) und mindestens einem zweiten Standort (52) auf der Grundlage einer optischen Datenübertragung eines benutzerdefinierten optischen Signals (201),
wobei das Telekommunikationsnetz (100) ein Backbone-Netz (122) und ein Aggregationsnetz (121) sowie ein Zugangsnetz (120) umfasst, und wobei das Telekommunikationsnetz (100) und seine Infrastruktur verwendet werden sowohl zum:
- Bereitstellen von Endnutzer-Kommunikationsdiensten und/oder von IP-Konnektivität für mehrere Endnutzer (50, 50'), die mit dem Zugangsnetz (120) verbunden sind, als auch
- Verbinden des ersten Standortes (51) und des mindestens zweiten Standortes (52) mittels mindestens einer Zugangsnetzinfrastruktur und einer Aggregationsnetzinfrastruktur, die mehrere optische Netzknoten (123) umfasst,
wobei der erste Standort (51) mit dem Telekommunikationsnetz (100) mittels mindestens einer ersten optischen Datenübertragungsfaser (51') verbunden ist, und wobei der zweite Standort (52) mit dem Telekommunikationsnetz (100) mittels mindestens einer zweiten optischen Datenübertragungsfaser (52') verbunden ist,
**dadurch gekennzeichnet, dass** das Breitbandzugangsnetz (120) eine optische Sicherheits- und Richtlinienentität oder -funktionalität (210) umfasst, die den ersten Standort (51) mit dem Aggregationsnetz (121) verbindet, wobei die optische Sicherheits- und Richtlinienentität oder -funktionalität (210) direkt mit der ersten optischen Datenübertragungsfaser (51') verbunden ist und direkt mit dem Aggregationsnetz (121) verbunden ist, wobei das Verfahren die folgenden Schritte umfasst:
- in einem ersten Schritt wird das benutzerdefinierte optische Signal (201) in die erste optische Datenübertragungsfaser (51') eingespeist oder eingegeben, wobei die optische Sicherheits- und Richtlinienentität oder -funktionalität (210)
- einen Schutz einer optischen Übertragungsfunktionalität in Bezug auf das Aggregationsnetz (121), wobei die optische Sicherheits- und Richtlinienentität oder -funktionalität (210) die Zulassung von optischen Signalen mit zu hoher Leistung oder mit Fremdwellenlängen verhindert,
- eine Richtlinienentscheidungsfunktionalität und
- eine Richtliniendurchsetzungsfunktionalität bezüglich des benutzerdefinierten optischen Signals (201) bereitstellt, und
- in einem zweiten Schritt wird das benutzerdefinierte optische Signal (201) in der zweiten optischen Datenübertragungsfaser (52') empfangen,
wobei das benutzerdefinierte optische Signal (201) einem operativen Signal entspricht, das zwischen dem ersten und dem zweiten Standort (51, 52) zu übertragen ist, wobei vor dem Einspeisen oder Eingeben des benutzerdefinierten optischen Signals (201) in die erste optische Datenübertragungsfaser (51') ein Initialisierungssignal (205) in die erste optische Datenübertragungsfaser (51') eingespeist oder eingegeben wird, wobei das Initialisierungssignal (205) durch die optische Sicherheits- und Richtlinienentität oder -funktionalität (210) detektiert wird, wobei anschließend eine optische und transparente Benutzerebenen-Punkt-zu-Punkt-Verbindung zwischen dem ersten und dem zweiten Standort (51, 52) realisiert wird, falls das Initialisierungssignal (205) gültig ist, und der Kommunikations- oder Konnektivitätsdienst zwischen dem ersten Standort (51) und dem zweiten Standort (52) verweigert wird, falls das Initialisierungssignal (205) ungültig ist, wobei die optische Sicherheits- und Richtlinienentität oder -funktionalität (210) einen Schutz der optischen Übertragungsfunktionalität in Bezug auf das Aggregationsnetz (121) - neben bezüglich des benutzerdefinierten optischen Signals (201) - auch bezüglich des Initialisierungssignals (205) bereitstellt.

2. Verfahren nach Anspruch 1, wobei das Telekommunikationsnetz (100) eine Übertragungsfunktionalität bezüglich des Backbone-Netzes (122) und des Aggregationsnetzes (121) und des Zugangsnetzes (120) umfasst, wobei das benutzerdefinierte optische Signal (201) durch ein optisches Modulationsregime gekennzeichnet ist, wobei ein Übertragungspfad zwischen dem ersten Standort (51) und dem zweiten Standort (52) einen optischen Übertragungspfad umfasst, der die erste optische Datenübertragungsfaser (51') und die zweite optische Datenübertragungsfaser (52') umfasst, und wobei die Übertragungsfunktionalität so ausgelegt ist, dass das optische Modulationsregime über den gesamten optischen Übertragungspfad beibehalten wird, wobei insbesondere der Übertragungspfad mit dem optischen Übertragungspfad identisch ist.

3. Verfahren nach einem der vorangehenden Ansprüche, wobei ein weiteres benutzerdefiniertes optisches Signal (202) in die zweite optische Datenübertragungsfaser (52') eingespeist oder eingegeben und in der ersten optischen Datenübertragungsfaser (51') empfangen wird, wobei das weitere benutzerdefinierte optische Signal (202) gleichfalls ein benutzerdefiniertes optisches Signal ist, wobei insbesondere das benutzerdefinierte optische Signal (201) und das weitere benutzerdefinierte optische Signal (202) zwischen dem ersten und dem zweiten Standort (51, 52) in einer transparenten und/oder optisch unveränderten Weise übertragen werden, insbesondere so, dass das benutzerdefinierte optische Signal (201) in der zweiten optischen Datenübertragungsfaser (52') so empfangen wird, wie es in die erste optische Datenübertragungsfaser (51') eingespeist oder eingegeben wurde, und insbesondere so, dass das weitere benutzerdefinierte optische Signal (202) in der ersten optischen Datenübertragungsfaser (51') so empfangen wird, wie es in die zweite optische Datenübertragungsfaser (52') eingespeist oder eingegeben wurde,
wobei insbesondere der optischen Übertragungsfunktionalität weder das benutzerdefinierte optische Signal (201) noch das weitere benutzerdefinierte optische Signal (202) bekannt ist, die durch die optische Übertragungsfunktionalität frei und unter Verwendung jedes beliebigen technisch möglichen Protokolls übertragen werden.

4. Verfahren nach einem der vorangehenden Ansprüche, wobei das Breitbandzugangsnetz (120) mindestens einen Vermittlungsamt-Übergabepunkt (110) umfasst, der die optische Sicherheits- und Richtlinienentität oder -funktionalität (210) umfasst oder mit dieser gekoppelt ist.

5. Verfahren nach einem der vorangehenden Ansprüche, wobei der Vermittlungsamt-Übergabepunkt (110) den ersten Standort (51) und/oder die erste optische Datenübertragungsfaser (51') mit dem Telekommunikationsnetz (100), insbesondere dessen Übertragungsfunktionalität, verbindet, und wobei ein weiterer Vermittlungsamt-Übergabepunkt (110') den zweiten Standort (52) und/oder die zweite optische Datenübertragungsfaser (52') mit dem Telekommunikationsnetz (100), insbesondere dessen Übertragungsfunktionalität, verbindet,
wobei dadurch eine optische und transparente Benutzerebenen-Punkt-zu-Punkt-Verbindung zwischen dem ersten und dem zweiten Standort (51, 52) realisiert wird.

6. Verfahren nach einem der vorangehenden Ansprüche, wobei der erste Standort (51) über die erste optische Datenübertragungsfaser (51') unter Verwendung von mindestens einem von Folgendem mit dem Vermittlungsamt-Übergabepunkt (110) verbunden wird:
- eine passive optische Faser als eine Punkt-zu-Punkt-Verbindung,
- eine aktive optische Faser, das heißt optisch verstärkt,
- ein passives optisches Netz, insbesondere ein PON, XGS-PON, PON-Tree oder ein Teil davon.

7. Verfahren nach einem der vorangehenden Ansprüche, wobei der Vermittlungsamt-Übergabepunkt (110) mehrere Zugangsknoten (150) und eine Orchestratorentität oder -funktionalität (180) umfasst, wobei die mehreren Zugangsknoten (150) insbesondere eine optische Netzterminierungsfunktionalität für einen oder mehrere Endnutzer (50, 50') im Hinblick darauf bereitstellen, dass den Endnutzern (50, 50') durch das Telekommunikationsnetz (100) eine IP-Konnektivität bereitgestellt wird, wobei die Endnutzer (50, 50') mit dem Telekommunikationsnetz (100) über eine Zugangsnetzinfrastruktur, insbesondere mindestens teilweise eine Glasfaserinfrastruktur (55), verbunden werden.

8. Verfahren nach einem der vorangehenden Ansprüche, wobei der Kommunikations- oder Konnektivitätsdienst eine netzinterne Übertragungsfunktionalität zwischen der optischen Sicherheits- und Richtlinienentität oder -funktionalität (210) und der weiteren optischen Sicherheits- und Richtlinienentität oder -funktionalität (210') verwendet, wobei die netzinterne Übertragungsfunktionalität segmentweise unter Verwendung einer optischen Segmentvermittlungskennungsinformation gelenkt wird, wobei die optische Segmentvermittlungskennungsinformation insbesondere auf dem Transportsignal moduliert und durch aufeinanderfolgende optische Knoten abgerufen wird, um eine Routungsentscheidung zu treffen und das optische Signal entlang eines Übertragungspfades weiterzuleiten, wobei der Übertragungspfad insbesondere mehrere Übertragungssegmente umfasst.

9. Breitbandzugangsnetz (120) oder Telekommunikationsnetz (100) zum Bereitstellen, mittels eines Telekommunikationsnetzes (100), eines Kommunikations- oder Konnektivitätsdienstes zwischen einem ersten Standort (51) und mindestens einem zweiten Standort (52) auf der Grundlage einer optischen Datenübertragung eines benutzerdefinierten optischen Signals (201),
wobei das Telekommunikationsnetz (100) ein Backbone-Netz (122) und ein Aggregationsnetz (121) sowie das Zugangsnetz (120) umfasst und das Breitbandzugangsnetz (120) und das Telekommunikationsnetz (100) und seine Infrastruktur verwendet werden sowohl zum:
- Bereitstellen von Endnutzer-Kommunikationsdiensten und/oder von IP-Konnektivität für mehrere Endnutzer (50, 50'), die mit dem Zugangsnetz (120) verbunden sind, als auch
- Verbinden des ersten Standortes (51) und des mindestens zweiten Standortes (52) mittels mindestens einer Zugangsnetzinfrastruktur und einer Aggregationsnetzinfrastruktur, die mehrere optische Netzknoten (123) umfasst, wobei der erste Standort (51) mittels mindestens einer ersten optischen Datenübertragungsfaser (51') mit dem Telekommunikationsnetz (100) verbunden ist, und wobei der zweite Standort (52) mittels mindestens einer zweiten optischen Datenübertragungsfaser (52') mit dem Telekommunikationsnetz (100) verbunden ist,
**dadurch gekennzeichnet, dass** das Breitbandzugangsnetz (120) eine optische Sicherheits- und Richtlinienentität oder -funktionalität (210) umfasst, die den ersten Standort (51) mit dem Aggregationsnetz (121) verbindet, wobei die optische Sicherheits- und Richtlinienentität oder -funktionalität (210) direkt mit der ersten optischen Datenübertragungsfaser (51') verbunden ist und direkt mit dem Aggregationsnetz (121) verbunden ist, wobei die optische Sicherheits- und Richtlinienentität oder -funktionalität (210) dazu eingerichtet ist,
- einen Schutz einer optischen Übertragungsfunktionalität in Bezug auf das Aggregationsnetz (121), wobei die optische Sicherheits- und Richtlinienentität oder -funktionalität (210) dazu eingerichtet ist, die Zulassung von optischen Signalen mit zu hoher Leistung oder mit Fremdwellenlängen zu verhindern,
- eine Richtlinienentscheidungsfunktionalität und
- eine Richtliniendurchsetzungsfunktionalität bezüglich des benutzerdefinierten optischen Signals (201) bereitzustellen, wobei das Breitbandzugangsnetz (120) oder das Telekommunikationsnetz (100) so eingerichtet ist, dass das benutzerdefinierte optische Signal (201), das in die erste optische Datenübertragungsfaser (51') eingespeist oder eingegeben wird, zu der zweiten optische Datenübertragungsfaser (52') übertragen wird, wobei das benutzerdefinierte optische Signal (201) einem operativen Signal entspricht, das zwischen dem ersten und dem zweiten Standort (51, 52) zu übertragen ist, wobei die optische Sicherheits- und Richtlinienentität oder -funktionalität (210) dazu eingerichtet ist, ein Initialisierungssignal (205) zu detektieren, das in die erste optische Datenübertragungsfaser (51') eingespeist oder eingegeben wird, bevor das benutzerdefinierte optische Signal (201) in die erste optische Datenübertragungsfaser (51') eingespeist oder eingegeben wird,
wobei das Breitbandzugangsnetz (120) oder das Telekommunikationsnetz (100) so eingerichtet ist, dass im Anschluss an die Detektion des Initialisierungssignals (205) eine optische und transparente Benutzerebenen-Punkt-zu-Punkt-Verbindung zwischen zwischen dem ersten und dem zweiten Standort (51, 52) realisiert wird, falls das Initialisierungssignal (205) gültig ist, und so, dass der Kommunikations- oder Konnektivitätsdienst zwischen dem ersten Standort (51) und dem zweiten Standort (52) verweigert wird, falls das Initialisierungssignal (205) ungültig ist, wobei die optische Sicherheits- und Richtlinienentität oder -funktionalität (210) dazu eingerichtet ist, einen Schutz der optischen Übertragungsfunktionalität in Bezug auf das Aggregationsnetz (121) - neben bezüglich des benutzerdefinierten optischen Signals (201) - auch bezüglich des Initialisierungssignals (205) bereitzustellen.

10. System, umfassend Mittel eines Telekommunikationsnetzes (100) zum Bereitstellen eines Kommunikations- oder Konnektivitätsdienstes zwischen einem ersten Standort (51) und mindestens einem zweiten Standort (52) auf der Grundlage einer optischen Datenübertragung eines benutzerdefinierten optischen Signals (201),
wobei das Telekommunikationsnetz (100) ein Backbone-Netz (122) und ein Aggregationsnetz (121) sowie ein Breitbandzugangsnetz (120) umfasst, und das Breitbandzugangsnetz (120) und das Telekommunikationsnetz (100) und seine Infrastruktur verwendet werden sowohl zum:
- Bereitstellen von Endnutzer-Kommunikationsdiensten und/oder von IP-Konnektivität für mehrere Endnutzer (50, 50'), die mit dem Zugangsnetz (120) verbunden sind, als auch
- Verbinden des ersten Standortes (51) und des mindestens zweiten Standortes (52) mittels mindestens einer Zugangsnetzinfrastruktur und einer Aggregationsnetzinfrastruktur, die mehrere optischen Netzknoten (123) umfasst,
wobei der erste Standort (51) mit dem Telekommunikationsnetz (100) mittels mindestens einer ersten optischen Datenübertragungsfaser (51') verbunden ist, und wobei der zweite Standort (52) mit dem Telekommunikationsnetz (100) mittels mindestens einer zweiten optischen Datenübertragungsfaser (52') verbunden ist,
**dadurch gekennzeichnet, dass** das Breitbandzugangsnetz (120) eine optische Sicherheits- und Richtlinienentität oder -funktionalität (210) umfasst, die den ersten Standort (51) mit dem Aggregationsnetz (121) verbindet, wobei die optische Sicherheits- und Richtlinienentität oder -funktionalität (210) direkt mit der ersten optischen Datenübertragungsfaser (51') verbunden ist und direkt mit dem Aggregationsnetz (121) verbunden ist, wobei die optische Sicherheits- und Richtlinienentität oder -funktionalität (210) dazu eingerichtet ist,
- einen Schutz einer optischen Übertragungsfunktionalität in Bezug auf das Aggregationsnetz (121), wobei die optische Sicherheits- und Richtlinienentität oder -funktionalität (210) dazu eingerichtet ist, die Zulassung von optischen Signalen mit zu hoher Leistung oder mit Fremdwellenlängen zu verhindern,
- eine Richtlinienentscheidungsfunktionalität und
- eine Richtliniendurchsetzungsfunktionalität bezüglich des benutzerdefinierten optischen Signals (201) bereitzustellen,
wobei das System so eingerichtet ist, dass das benutzerdefinierte optische Signal (201), das in die erste optische Datenübertragungsfaser (51') eingespeist oder eingegeben wird, zu der zweiten optischen Datenübertragungsfaser (52') übertragen wird, wobei das benutzerdefinierte optische Signal (201) einem operativen Signal entspricht, das zwischen dem ersten und dem zweiten Standort (51, 52) zu übertragen ist, wobei die optische Sicherheits- und Richtlinienentität oder -funktionalität (210) dazu eingerichtet ist, ein Initialisierungssignal (205) zu detektieren, das in die erste optische Datenübertragungsfaser (51') eingespeist oder eingegeben wird, bevor das benutzerdefinierte optische Signal (201) in die erste optische Datenübertragungsfaser (51') eingespeist oder eingegeben wird, wobei das System so eingerichtet ist, dass im Anschluss an die Detektion des Initialisierungssignals (205) eine optische und transparente Benutzerebenen-Punkt-zu-Punkt-Verbindung zwischen dem ersten und dem zweiten Standort (51, 52) realisiert wird, falls das Initialisierungssignal (205) gültig ist, und so, dass der Kommunikations- oder Konnektivitätsdienst zwischen dem ersten Standort (51) und dem zweiten Standort (52) verweigert wird, falls das Initialisierungssignal (205) ungültig ist, wobei die optische Sicherheits- und Richtlinienentität oder -funktionalität (210) dazu eingerichtet ist, einen Schutz der optischen Übertragungsfunktionalität in Bezug auf das Aggregationsnetz (121) - neben bezüglich des benutzerdefinierten optischen Signals (201) - auch bezüglich des Initialisierungssignals (205) bereitzustellen.

11. Optische Sicherheits- und Richtlinienentität oder -funktionalität (210) oder Vermittlungsamt-Übergabepunkt (110), umfassend eine optische Sicherheitsund Richtlinienentität oder -funktionalität (210), die bzw der bereitgestellt ist, um als Teil eines Systems nach Anspruch 10 oder als Teil eines Breitbandzugangsnetzes (120) oder eines Telekommunikationsnetzes (100) nach Anspruch 9 verwendet zu werden, und dazu eingerichtet ist, ein Verfahren nach einem der Ansprüche 1 bis 8 durchzuführen.

12. Programm, umfassend einen computerlesbaren Programmcode, der, wenn er in einem Netzknoten eines Telekommunikationsnetzes (100) nach Anspruch 9 und/oder in einer optischen Sicherheits- und Richtlinienentität oder -funktionalität (210) nach Anspruch 11 ausgeführt wird, den Netzknoten des Telekommunikationsnetzes (100) und/oder die optische Sicherheits- und Richtlinienentität oder -funktionalität (210) veranlasst, ein Verfahren nach einem der Ansprüche 1 bis 8 durchzuführen.

13. Computerlesbares Medium, umfassend Instruktionen, die, wenn sie in einem Netzknoten eines Telekommunikationsnetzes (100) nach Anspruch 9 und/oder in einer optischen Sicherheits- und Richtlinienentität oder -funktionalität (210) nach Anspruch 11 ausgeführt werden, den Netzknoten des Telekommunikationsnetzes (100) und/oder die optische Sicherheits- und Richtlinienentität oder -funktionalität (210) veranlassen, ein Verfahren nach einem der Ansprüche 1 bis 8 durchzuführen.

## Revendications

1. Procédé de fourniture, au moyen d'un réseau de télécommunications (100), d'un service de communication ou de connectivité entre un premier emplacement (51) et au moins un second emplacement (52) sur la base d'une transmission optique de données d'un signal optique (201) défini par l'utilisateur,
dans lequel le réseau de télécommunications (100) comprend un réseau fédérateur (122) et un réseau d'agrégation (121) ainsi qu'un réseau d'accès (120), et dans lequel le réseau de télécommunications (100) et son infrastructure sont utilisés à la fois pour :
- fournir des services de communication d'utilisateurs finaux et/ou une connectivité IP à une pluralité d'utilisateurs finaux (50, 50') reliés au réseau d'accès (120), et
- relier le premier emplacement (51) et le au moins un second emplacement (52) au moyen d'au moins une infrastructure de réseau d'accès et d'une infrastructure de réseau d'agrégation comprenant une pluralité de nœuds de réseau optiques (123),
dans lequel le premier emplacement (51) est relié au réseau de télécommunications (100) au moyen d'au moins une première fibre de transmission optique de données (51') et dans lequel le second emplacement (52) est relié au réseau de télécommunications (100) au moyen d'au moins une seconde fibre de transmission optique de données (52'), **caractérisé en ce que** le réseau d'accès à large bande (120) comprend une entité ou fonctionnalité de sécurité et de politique optiques (210) reliant le premier emplacement (51) au réseau d'agrégation (121), dans lequel l'entité ou la fonctionnalité de sécurité et de politique optiques (210) est directement reliée à la première fibre de transmission optique de données (51') et directement reliée au réseau d'agrégation (121), dans lequel le procédé comprend les étapes suivantes :
- dans une première étape, le signal optique défini par l'utilisateur (201) est injecté ou entrée dans la première fibre optique de transmission optique de données (51'), dans lequel l'entité ou la fonctionnalité de sécurité et de politique optiques (210) permet :
- une protection d'une fonctionnalité de transmission optique par rapport au réseau d'agrégation (121), dans lequel l'entité ou la fonctionnalité de sécurité et de politique optiques (210) empêche l'admission de signaux optiques avec une puissance trop élevée ou avec des longueurs d'onde étrangères,
- une fonctionnalité de décision d'ordre politique, et
- une fonctionnalité de mise en œuvre d'une politique concernant le signal optique défini par l'utilisateur (201), et
- dans une seconde étape, le signal optique défini par l'utilisateur (201) est reçu dans la seconde fibre de transmission optique de données (52'),
dans lequel le signal optique défini par l'utilisateur (201) correspond à un signal opérationnel à transmettre entre les premier et second emplacements (51, 52), dans lequel avant que le signal optique défini par l'utilisateur (201) soit injecté ou entré dans la première fibre de transmission optique de données (51'), un signal d'initialisation (205) est injecté ou entré dans la première fibre de transmission optique de données (51'), dans lequel le signal d'initialisation (205) est détecté par l'entité ou la fonctionnalité de sécurité et de politique optiques (210), dans lequel une liaison point à point de plan d'utilisateur optique et transparente est réalisée ultérieurement entre les premier et second emplacements (51, 52) dans un cas où le signal d'initialisation (205) est valide, et le service de communication ou de connectivité entre le premier emplacement (51) et le second emplacement (52) est refusé dans un cas où le signal d'initialisation (205) est invalide, dans lequel l'entité ou la fonctionnalité de sécurité et de politique optiques (210) permet une protection de la fonctionnalité de transmission optique par rapport au réseau d'agrégation (121) - concernant en plus le signal optique défini par l'utilisateur (201) - concernant également le signal d'initialisation (205).

2. Procédé selon la revendication 1, dans lequel le réseau de télécommunications (100) comprend une fonctionnalité de transmission concernant le réseau fédérateur (122) et le réseau d'agrégation (121) et le réseau d'accès (120), dans lequel le signal optique défini par l'utilisateur (201) est **caractérisé par** un schéma de modulation optique, dans lequel un trajet de transmission entre le premier emplacement (51) et le second emplacement (52) comprend un trajet de transmission optique comprenant la première fibre de transmission optique de données (51') et la seconde fibre de transmission optique de données (52'), et dans lequel la fonctionnalité de transmission est conçue de telle sorte que le schéma de modulation optique est maintenu tout au long du trajet de transmission optique,
dans lequel le trajet de transmission est en particulier identique au trajet de transmission optique.

3. Procédé selon l'une des revendications précédentes, dans lequel un signal optique supplémentaire (202) défini par un utilisateur est injecté ou entré dans la seconde fibre de transmission optique de données (52), et reçu dans la première fibre de transmission optique de données (51), dans lequel le signal optique supplémentaire défini par l'utilisateur (202) est aussi un signal optique défini par l'utilisateur,
dans lequel le signal optique défini par l'utilisateur (201) et le signal optique supplémentaire défini par l'utilisateur (202) sont en particulier transmis, entre les premier et second emplacements (51, 52), d'une manière transparente et/ou optiquement inchangée, en particulier de telle sorte que le signal optique défini par l'utilisateur (201) est reçu, dans la seconde fibre de transmission optique de données (52') tel qu'il a été injecté ou entré dans la première fibre de transmission optique de données (51'), et en particulier de telle sorte que le signal optique supplémentaire défini par l'utilisateur (202) est reçu, dans la première fibre de transmission optique de données (51') tel qu'il a été injecté ou entré dans l'entrée de la seconde fibre de transmission optique de données (52'),
dans lequel la fonctionnalité de transmission optique est en particulier agnostique à la fois au signal optique défini par l'utilisateur (201) et au signal optique supplémentaire défini par l'utilisateur (202), qui sont transmis librement par la fonctionnalité de transmission optique et en utilisant tout protocole techniquement possible.

4. Procédé selon l'une des revendications précédentes, dans lequel le réseau d'accès à large bande (120) comprend au moins un point de livraison de centre de commutation (110) comprenant ou étant couplé à l'entité ou à la fonctionnalité de sécurité et de politique optiques (210).

5. Procédé selon l'une des revendications précédentes, dans lequel le point de livraison de centre de commutation (110) relie le premier emplacement (51) et/ou la première fibre de transmission optique de données (51') au réseau de télécommunications (100), en particulier sa fonctionnalité de transmission, et dans lequel un point de livraison supplémentaire de centre de commutation (110') relie le second emplacement (52) et/ou la seconde fibre de transmission optique de données (52') au réseau de télécommunications (100), en particulier sa fonctionnalité de transmission,
en sorte qu'une liaison point à point de plan d'utilisateur optique et transparente est ainsi réalisée entre les premier et second emplacements (51, 52).

6. Procédé selon l'une des revendications précédentes, dans lequel le premier emplacement (51) est relié au point de livraison de centre de commutation (110), via la première fibre de transmission optique de données (51'), en utilisant au moins un parmi :
- une fibre optique passive comme une liaison point à point,
- une fibre optique active, c'est-à-dire optiquement amplifiée,
- un réseau optique passif, en particulier un PON, un XGS-PON, une arborescence de PON ou une partie de ceuxci.

7. Procédé selon l'une des revendications précédentes, dans lequel le point de livraison de centre de commutation (110) comprend une pluralité de nœuds d'accès (150) et une entité ou fonctionnalité d'orchestration (180), dans lequel les nœuds de la pluralité de nœuds d'accès (150) fournissent en particulier une fonctionnalité de terminaison de réseau optique à un utilisateur ou à une pluralité d'utilisateurs finaux (50, 50') compte tenu des utilisateurs finaux (50, 50') bénéficiant d'une connectivité IP par le réseau de télécommunications (100), dans lequel les utilisateurs finaux (50, 50') sont reliés au réseau de télécommunications (100) via une infrastructure de réseau d'accès, en particulier une infrastructure à fibre au moins partiellement optique (55).

8. Procédé selon l'une des revendications précédentes, dans lequel le service de communication ou de connectivité utilise une fonctionnalité de transmission interne au réseau entre l'entité ou la fonctionnalité de sécurité et de politique optiques (210) et l'entité ou la fonctionnalité supplémentaire de sécurité et de politique optiques (210'), dans lequel la fonctionnalité de transmission interne au réseau est dirigée par segments en utilisant une information d'identifiant de commutation optique de segment, l'information d'identifiant de communication optique de segment étant en particulier modulée au-dessus du signal de transport et récupérée par des nœuds optiques consécutifs afin de prendre une décision de routage et d'acheminer le signal optique le long d'un trajet de transmission, le trajet de transmission comprenant en particulier une pluralité de segments de transmission.

9. Réseau d'accès à large bande (120) ou réseau de télécommunications (100) pour la fourniture, au moyen du réseau de télécommunications (100), d'un service de communication ou de connectivité entre un premier emplacement (51) et au moins un second emplacement (52) sur la base d'une transmission optique de données d'un signal optique défini par l'utilisateur (201),
dans lequel le réseau de télécommunications (100) comprend un réseau fédérateur (122) et un réseau d'agrégation (121) ainsi que le réseau d'accès (120), et le réseau d'accès à large bande (120) et le réseau de télécommunications (100) et son infrastructure étant utilisés à la fois pour :
- fournir des services de communication d'utilisateurs finaux et/ou une connectivité IP à une pluralité d'utilisateurs finaux (50, 50') reliés au réseau d'accès (120), et
- relier le premier emplacement (51) et le au moins un second emplacement (52) au moyen d'au moins une infrastructure de réseau d'accès et d'une infrastructure de réseau d'agrégation comprenant une pluralité de nœuds de réseau optiques (123),
dans lequel le premier emplacement (51) est relié au réseau de télécommunications (100) au moyen d'au moins une première fibre de transmission optique de données (51'), et dans lequel le second emplacement (52) est relié au réseau de télécommunications (100) au moyen d'au moins une seconde fibre de transmission optique de données (52'), **caractérisé en ce que** le réseau d'accès à large bande (120) comprend une entité ou fonctionnalité de sécurité et de politique optiques (210) reliant le premier emplacement (51) au réseau d'agrégation (121), dans lequel l'entité ou la fonctionnalité de sécurité et de politique optiques (210) est directement reliée à la première fibre de transmission optique de données (51') et directement reliée au réseau d'agrégation (121), dans lequel l'entité ou la fonctionnalité de sécurité et de politique optiques (210) est configurée pour permettre :
- une protection d'une fonctionnalité de transmission optique par rapport au réseau d'agrégation (121), dans lequel l'entité ou la fonctionnalité de sécurité et de politique optiques (210) est configurée pour empêcher l'admission de signaux optiques avec une puissance trop élevée ou avec des longueurs d'onde étrangères,
- une fonctionnalité de décision d'ordre politique, et
- une fonctionnalité de mise en œuvre d'une politique concernant le signal optique défini par l'utilisateur (201), dans lequel le réseau d'accès à large bande (120) ou le réseau de télécommunications (100) est configuré de telle sorte que le signal optique défini par l'utilisateur (201), injecté ou entré dans la première fibre de transmission optique de données (51'), est transmis à la seconde fibre de transmission optique de données (52'), dans lequel le signal optique défini par l'utilisateur (201) correspond à un signal opérationnel à transmettre entre les premier et second emplacements (51, 52), dans lequel l'entité ou la fonctionnalité de sécurité et de politique optiques (210) est configurée pour détecter un signal d'initialisation (205) qui est injecté ou entré dans la première fibre de transmission optique de données (51') avant que le signal optique défini par l'utilisateur (201) soit injecté ou entré dans la première fibre de transmission optique de données(51"), dans lequel le réseau d'accès à large bande (120) ou le réseau de télécommunications (100) est configuré de telle sorte qu'après la détection du signal d'initialisation (205), une liaison point à point de plan d'utilisateur optique et transparente est réalisée entre les premier et second emplacements (51, 52) dans un cas où le signal d'initialisation (205) est valide, et de telle sorte que le service de communication ou de connectivité entre le premier emplacement (51) et le second emplacement (52) est refusé dans un cas où le signal d'initialisation (205) est invalide, dans lequel l'entité ou la fonctionnalité de sécurité et de politique optiques (210) est configurée pour permettre une protection de la fonctionnalité de transmission optique par rapport au réseau d'agrégation (121) - concernant en plus le signal optique défini par l'utilisateur (201) - concernant également le signal d'initialisation (205).

10. Système comprenant des moyens d'un réseau de télécommunications (100) pour fournir un service de communication ou de connectivité entre un premier emplacement (51) et au moins un second emplacement (52) sur la base d'une transmission optique de données d'un signal optique défini par l'utilisateur (201),
dans lequel le réseau de télécommunications (100) comprend un réseau fédérateur (122) et un réseau d'agrégation (121) ainsi qu'un réseau d'accès à large bande (120), et le réseau d'accès à large bande (120) et le réseau de télécommunications (100) et son infrastructure étant utilisés à la fois pour :
- fournir des services de communication d'utilisateurs finaux et/ou une connectivité IP à une pluralité d'utilisateurs finaux (50, 50') reliés au réseau d'accès (120), et
- relier le premier emplacement (51) et le au moins un second emplacement (52) au moyen d'au moins une infrastructure de réseau d'accès et d'une infrastructure de réseau d'agrégation comprenant une pluralité de nœuds de réseau optiques (123),
dans lequel le premier emplacement (51) est relié au réseau de télécommunications (100) au moyen d'au moins une première fibre de transmission optique de données (51'), et dans lequel le second emplacement (52) est relié au réseau de télécommunications (100) au moyen d'au moins une seconde fibre de transmission optique de données (52'), **caractérisé en ce que** le réseau d'accès à large bande (120) comprend une entité ou fonctionnalité de sécurité et de politique optiques (210) reliant le premier emplacement (51) au réseau d'agrégation (121), dans lequel l'entité ou la fonctionnalité de sécurité et de politique optiques (210) est directement reliée à la première fibre de transmission optique de données (51') et directement reliée au réseau d'agrégation (121), dans lequel l'entité ou la fonctionnalité de sécurité et de politique optiques (210) est configurée pour permettre :
- une protection d'une fonctionnalité de transmission optique par rapport au réseau d'agrégation (121), dans lequel l'entité ou la fonctionnalité de sécurité et de politique optiques (210) est configurée pour empêcher l'admission de signaux optiques avec une puissance trop élevée ou avec des longueurs d'onde étrangères,
- une fonctionnalité de décision d'ordre politique, et
- une fonctionnalité de mise en œuvre d'une politique concernant le signal optique défini par l'utilisateur (201),
dans lequel le système est configuré de telle sorte que le signal optique défini par l'utilisateur (201), injecté ou entré dans la première fibre de transmission optique de données (51'), est transmis à la seconde fibre de transmission optique de données (52'), dans lequel le signal optique défini par l'utilisateur (201) correspond à un signal opérationnel à transmettre entre les premier et second emplacements (51, 52), dans lequel l'entité ou la fonctionnalité de sécurité et de politique optiques (210) est configurée pour détecter un signal d'initialisation (205) qui est injecté ou entré dans la première fibre de transmission optique de données (51') avant que le signal optique défini par l'utilisateur (201) soit injecté ou entré dans la première fibre de transmission optique de données (51'), dans lequel le système est configuré de telle sorte qu'après la détection du signal d'initialisation (205), une liaison point à point de plan d'utilisateur optique et transparente est réalisée entre les premier et second emplacements (51, 52) dans un cas où le signal d'initialisation (205) est valide, et de telle sorte que le service de communication ou de connectivité entre le premier emplacement (51) et le second emplacement (52) est refusé dans un cas où le signal d'initialisation (205) est invalide, dans lequel l'entité ou la fonctionnalité de sécurité et de politique optiques (210) est configurée pour permettre une protection de la fonctionnalité de transmission optique par rapport au réseau d'agrégation (121) - concernant en plus le signal optique défini par l'utilisateur (201) - concernant également le signal d'initialisation (205).

11. Entité ou fonctionnalité de sécurité et de politique optiques (210) ou point de livraison de centre de commutation (110) comprenant une entité ou fonctionnalité de sécurité et de politique optiques (210) fournie pour être utilisée en tant que partie d'un système selon la revendication 10 ou en tant que partie d'un réseau d'accès à large bande (120) ou d'un réseau de télécommunications (100) selon la revendication 9, et configurée pour mettre en œuvre un procédé selon l'une quelconque des revendications 1 à 8.

12. Programme comprenant un code de programme lisible par ordinateur qui, lorsqu'il est exécuté sur un nœud de réseau d'un réseau de télécommunications (100) selon la revendication 9 et/ou sur une entité ou fonctionnalité de sécurité et de politique optiques (210) selon la revendication 11, amène le nœud de réseau du réseau de télécommunications (100) et/ou l'entité ou la fonctionnalité de sécurité et de politique optiques (210) à mettre en œuvre un procédé selon l'une des revendications 1 à 8.

13. Support lisible par ordinateur comprenant des instructions qui, lorsqu'elles sont exécutées sur un nœud de réseau d'un réseau de télécommunications (100) selon la revendication 9 et/ou sur une entité ou fonctionnalité de sécurité et de politique optiques (210) selon la revendication 11, amène le nœud de réseau du réseau de télécommunications (100) et/ou l'entité ou la fonctionnalité de sécurité et de politique optiques (210) à mettre en œuvre un procédé selon l'une des revendications 1 à 8.
